# FASCICULE DE BREVET EUROPEEN

(11) **EP 2 707 916 B1**
(45) Date de publication et mention de la délivrance du brevet: **09.09.2015**
(21) Numéro de dépôt: 12719765.5
(22) Date de dépôt: 11.05.2012
(51) Int. Cl.: H01M 2/26, H01M 10/04, H01M 10/052, H01M 10/0585, H01G 11/72, H01G 11/76, H01G 11/10, H01M 2/20

(54) **ARCHITECTURE A EMPILEMENT D'ELEMENTS DE STOCKAGE ET/OU DE GENERATION D'ENERGIE ELECTRIQUE A SORTIE ELECTRIQUE CONFIGURABLE, PROCEDE DE REALISATION D'UNE TELLE ARCHITECTURE**
ARCHITEKTUR MIT STAPELUNG VON STROMSPEICHERNDEN UND/ODER STROMERZEUGENDEN ELEMENTEN MIT KONFIGURIERBARER ELEKTRISCHER LEISTUNG, VERFAHREN ZUR HERSTELLUNG EINER SOLCHEN ARCHITEKTUR
ARCHITECTURE WITH STACKING OF STORAGE AND/OR ELECTRICAL ENERGY GENERATING ELEMENTS WITH CONFIGURABLE ELECTRICAL OUTPUT, METHOD OF PRODUCING SUCH AN ARCHITECTURE

(30) Priorité: 13.05.2011 FR 1154193
(43) Date de publication de la demande: 19.03.2014
(73) Titulaire: Commissariat à l'Énergie Atomique et aux Énergies Alternatives, 75015 Paris (FR)
(72) Inventeur: OUKASSI, Sami, F-38120 Saint- Egreve (FR); SALOT, Raphaël, F-38250 Lans-en-Vercors (FR)
(74) Mandataire: Ahner, Philippe
(86) Numéro de dépôt international: PCT/EP2012/058788
(87) Numéro de publication internationale: WO 2012/156315

(56) Documents cités:
- FR-A1- 2 874 128
- US-A1- 2005 130 036
- US-A1- 2006 216 589
- US-A1- 2009 029 251
- US-A1- 2009 136 839

## Description

### DOMAINE TECHNIQUE

L'invention concerne le domaine des batteries, dites tout-solide, et en particulier les micro-batteries, constituées d'empilements de films ou couches minces obtenus par des techniques de dépôt sous vide.

Comme selon le sens usuel du domaine, une micro-batterie selon l'invention est définie comme étant un générateur électrochimique tout solide rechargeable, présentant une épaisseur de quelques dizaines de micromètres, typiquement de 10 à 25 µm, une surface allant de quelques mm² à quelques cm², et constituée unitairement d'un empilement de plusieurs couches minces dont une couche d'électrode positive, une couche d'électrode négative, une couche d'électrolyte intercalé entre les couches d'électrode positive et négative, les autres couches ayant des fonctions de collecteur de courant, d'isolation électrique de protection et d'encapsulation.

Parmi les applications visées pour les micro-batteries, outre les cartes à puces et les étiquettes intelligentes, dites RFID (abréviation en anglais de « *Radio Frequency Identification* »)*,* figurent l'alimentation électrique d'horloges internes de composants électroniques et de microsystèmes, en particulier mécaniques, dits MEMS (abréviation en anglais de « *Micro-Electro-Mechanical Systems* »).

Ces applications imposent que toutes les couches minces nécessaires au fonctionnement de la micro-batterie soient fabriquées selon des techniques compatibles avec les procédés industriels du domaine de la microélectronique.

Les nombreuses applications des micro-batteries exigent une amélioration de leurs propriétés électriques, notamment en termes d'augmentation de leur capacité et de tension de sortie.

Dans ce contexte, l'invention concerne plus particulièrement un dispositif de stockage et/ou de génération d'énergie électrique à base d'éléments de stockage et/ou de génération d'énergie électrique présentant des sorties électriques configurables.

Plus particulièrement encore, les éléments de stockage et/ou de génération d'énergie électrique selon l'invention sont des micro-batteries réalisées chacune sur un support isolant électrique.

Bien que décrite de manière détaillée en référence aux micro-batteries, l'invention s'applique aussi à des éléments de stockage et de génération électrique constitués par des batteries et des éléments de génération électrique constitués par des piles que l'on cherche à empiler, notamment pour des raisons d'encombrement, et qui présentent chacune un pôle positif et un pôle négatif.

### ART ANTÉRIEUR

Les micro-batteries « tout solide » sous forme d'un empilement de films minces sont aujourd'hui bien connues. Leur principe de fonctionnement repose sur l'insertion et la désinsertion (ou intercalation-désintercalation) d'un ion de métal alcalin ou d'un proton dans l'électrode positive. Les principaux systèmes de micro-batteries utilisent comme espèce ionique l'ion Lithium Li⁺ issu d'une électrode en lithium métallique. Tous les composants de la micro-batterie que sont les collecteurs de courant, les électrodes positive et négative, l'électrolyte, l'encapsulation, sont sous forme de couches minces obtenues par dépôt sous vide PVD (abréviation en anglais de « *Physical Vapor Déposition* ») ou CVD (abréviation en anglais de « *Chemical Vapor Deposition* »). L'épaisseur totale de l'empilement est de quelques dizaines de micromètres, typiquement de l'ordre de 15 µm.

Différents matériaux peuvent être utilisés pour les composants :
- les collecteurs de courant sont en métalliques et peuvent être par exemple à base de Pt, Cr, Au, Ti, W, Mo,
- l'électrode positive peut être notamment constituée de LiCoO₂, LinoO₂, LiMn₂O₄, CuS, CuS₂, WO_{y}S_{z}, TiO_{y}S_{z}, V₂O₅. Selon les matériaux choisis, un recuit thermique peut être nécessaire pour augmenter la cristallisation des films minces et leur propriété d'insertion. C'est notamment le cas pour les oxydes lithiés. Néanmoins, certains matériaux amorphes, notamment des oxysulfures de titane, permettent intrinsèquement une insertion élevée d'ions lithium sans qu'il y ait lieu de leur faire subir un tel traitement de recuit thermique,

- l'électrolyte doit être bon conducteur ionique et isolant électronique. Il s'agit en général d'un matériau vitreux à base d'oxyde de bore, d'oxydes de lithium ou de sels de lithium. Les électrolytes les plus performants sont à base de phosphate tels que LiPON, LiSiPON,
- l'électrode négative peut être du lithium métallique déposé par évaporation thermique, un alliage métallique à base de lithium ou bien un composé d'insertion (SiTON, SnNₓ, InNₓ, SnO₂...). Il existe également des micro-batteries sans lithium métallique, dites « Li free ». Dans ce cas, une couche de métal bloquant le lithium est déposée. Le lithium vient alors s'électro-déposer sur cette couche.
- l'encapsulation a comme fonction de protéger l'empilement actif de l'environnement extérieur et spécifiquement de l'humidité. Il existe différentes techniques pour réaliser l'encapsulation: encapsulation à partir de couches minces, encapsulation à partir de colaminés, i-e le laminage simultané de deux couches, ou encapsulation par capotage.

Par ailleurs, il est connu que les propriétés électriques des micro-batteries sont liées directement aux propriétés des matériaux les constituant :
- la tension délivrée par une micro-batterie dépend des matériaux d'électrodes positive et négative et du processus d'insertion des ions lithium au sein de la structure cristallographique desdits matériaux. Typiquement, un couple d'électrodes positive/négative en V₂O₅/Li fournit une tension comprise entre 1,5 et 3,8 V ; un couple en TiOS/Li fournit une tension comprise entre 1 et 3V ; un couple en LiCoO₂/Li fournit une tension entre 3 et 4.2V,
- la capacité stockée dans une micro-batterie dépend de la nature et de la quantité des matériaux d'électrodes d'insertion. Typiquement, pour une électrode en LiCoO₂, la capacité volumique est de 69µAh/cm².µm⁻¹ ; pour une électrode en TiOS, elle est de 80µAh/cm².µm⁻¹. De plus, la proportionnalité entre la quantité de matière, i-e essentiellement l'épaisseur pour une surface constante, et la capacité de stockage est généralement non linéaire.

De ce fait, certaines applications, qui requièrent des caractéristiques électriques spécifiques, nécessitent souvent la connexion électrique de plusieurs micro-batteries entre elles, soit en configuration série, soit en configuration parallèle. Ainsi, en réalisant une connexion électrique en série ou en parallèle de micro-batteries entre elles, il est possible de satisfaire des conditions d'alimentation électriques inaccessibles uniquement avec les propriétés intrinsèques des matériaux, même performants (haute tension, forte capacité, ...), utilisés dans une seule micro-batterie.

Un certain nombre de solutions de connexions de plusieurs micro-batteries entre elles ont déjà été proposés dans l'état de l'art pour satisfaire à ces conditions d'alimentation électrique inaccessibles avec une seule micro-batterie.

Par ailleurs, il est connu de réaliser une architecture à empilement des micro-batteries connectées entre elles afin de réduire l'encombrement de celles-ci.

On peut classer en deux catégories distinctes les architectures à empilement de micro-batteries connectées entre elles.

La première catégorie peut être qualifiée d'architecture par intégration hétérogène car chaque micro-batterie est réalisée sur un support propre et l'architecture finale est réalisée par l'intégration avec connexion de toutes les micro-batteries entre elles. En d'autres termes, dans cette première catégorie, on effectue les étapes suivantes :
- dépôt des couches minces de chaque micro-batterie individuelle sur un même substrat,
- découpe dudit substrat commun supportant toutes les micro-batteries réalisées,
- ultérieurement à la découpe, connexion électrique des micro-batteries entre elles.

On peut citer dans cette première catégorie la demande de brevet US 2009/0136839 qui divulgue une architecture à empilement de micro-batteries et son procédé de réalisation, les micro-batteries pouvant dans cette architecture être connectées entre elles soit uniquement en série, soit uniquement en parallèle comme montré en figure 5. L'architecture proposée selon cette demande US 2009/0136839 présente certaines limitations techniques et plus particulièrement:
- une configuration figée de la connexion électrique des micro-batteries. En effet, les micro-batteries sont connectées physiquement par des matériaux issus des étapes de dépôt et de gravure faisant partie intégrante du procédé de fabrication. De ce fait, il n'est pas possible de changer la configuration de cette connexion après la fabrication pour obtenir une tension de sortie ou une capacité différente. Il est en outre impossible de pouvoir déconnecter une micro-batterie défaillante de la micro-source d'énergie électrique formée et par là, le reste des micro-batteries fonctionnelles, c'est-à-dire encore en état de marche, ne peut être utilisé.
- une faible densité d'énergie volumique de la micro-source d'énergie électrique formée, étant donné la présence d'une couche intermédiaire en résine époxy entre deux micro-batteries empilées adjacentes.

Dans cette première catégorie, on peut également citer la demande de brevet US 2009/0029251 qui divulgue une architecture à empilement de micro-batteries connectées entre elles par le biais de leurs supports qui sont tous conducteurs électroniques. La densité d'énergie volumique avec l'architecture proposée selon cette demande peut être considérée comme meilleure que celle mentionnée ci-dessus, étant donné qu'ici les supports constituent également un collecteur de courant. Par contre, l'architecture proposée présente la même limitation technique de configuration figée de la connexion des micro-batteries et donc l'impossibilité de configuration de la connexion après fabrication.

On peut enfin citer dans cette première catégorie, d'autres exemples d'architectures connues, telles que celles divulguées dans les demandes de brevet US 2008/0261107, US 2006/0216589 et qui présentent la même limitation technique, à savoir une connexion électrique définitivement figée pendant le procédé de fabrication et par conséquent l'impossibilité de configurer à souhait les propriétés électriques de sortie de la micro-source d'énergie électrique formée, c'est-à-dire sa tension de sortie et sa capacité de décharge.

La deuxième catégorie peut être qualifiée d'architecture par intégration monolithique car, dans cette catégorie, les micro-batteries sont réalisées individuellement par dépôt sur un même substrat, l'empilement des micro-batteries entre elles se faisant au niveau de certaines couches minces des micro-batteries adjacentes. Ainsi, dans cette deuxième catégorie, il n'y a pas d'étape de découpe ni d'étape de connexion ultérieure à réaliser. Autrement dit, ce qui distingue une architecture selon la deuxième catégorie d'une architecture selon la première catégorie, c'est que la micro-source d'énergie constituée en final comprend un unique substrat sur lequel toutes les couches minces constituant toutes les micro-batteries sont déposées directement ou non.

On peut citer la demande de brevet WO 2008/059409 qui divulgue une architecture à empilement de micro-batteries de la deuxième catégorie. Le mode de réalisation illustré de la figure 1 de cette demande WO 2008/059409 concerne une micro-source d'énergie à quatre micro-batteries, réparties en deux empilements distincts de deux micro-batteries l'une sur l'autre, les deux empilements distincts étant agencés sur un même substrat. Les deux micro-batteries empilées l'une sur l'autre sont séparées par une couche intermédiaire en matériau conducteur électronique, à fonction à la fois de connexion électrique, en l'occurrence une connexion en série, et de barrière à la diffusion des ions Li⁺. Une configuration de la tension de sortie est possible en utilisant une unité de contrôle électronique permettant de commuter sur les différents plots de sortie de la micro-source.

L'architecture proposée selon cette demande WO 2008/059409 présente certaines limitations techniques et plus particulièrement :
- une configuration figée de la connexion au moins au niveau des micro-batteries empilées, étant donné qu'elles sont connectées en série par la couche intermédiaire en matériau conducteur électronique,
- des limitations d'ordre physico-chimique.
   Tout d'abord, le nombre de matériaux susceptibles d'être utilisés pour cette architecture est limité. Par exemple, il n'est pas possible de faire un empilement de deux micro-batteries avec un matériau d'électrode positive tel que le LiCoO₂. Le LiCoO₂ nécessite en effet un recuit d'activation à haute température (700°C) incompatible avec la présence d'une couche telle que l'électrolyte LiPON au sein de l'empilement pendant ce recuit. En outre, il est nécessaire de prévoir à chaque étape de dépôt d'une couche donnée la compatibilité du gaz de dépôt utilisé avec les couches déjà déposées sur le substrat. Enfin, le niveau des contraintes mécaniques de l'empilement total est élevé.

Le but de l'invention est de proposer un dispositif de stockage et/ou de génération d'énergie électrique à partir d'une architecture à empilement d'éléments de stockage et/ou de génération d'énergie, notamment des micro-batteries, qui pallie tout ou partie des limitations techniques des solutions selon l'état de l'art et, plus particulièrement, qui permette d'avoir des sorties électriques configurables.

### EXPOSE DE L'INVENTION

Pour ce faire, l'invention a pour objet un dispositif de stockage et/ou de génération d'énergie électrique comportant une pluralité d'un nombre égal à N éléments de stockage et/ou de génération d'énergie électrique réalisés chacun sur un support et empilés les uns sur les autres.

Selon l'invention :
- chaque support comporte, à la périphérie des couches minces composant l'élément supporté, une pluralité d'un nombre au moins égal à X*N de plots en matériau conducteur électronique traversant ledit support, avec un nombre égal à X1 de plots connecté (s) au(x) collecteur(s) de courant positif de l'élément supporté et un nombre égal à X2 de plots connecté (s) au(x) collecteur(s) de courant négatif de l'élément supporté, la somme X1 + X2 étant égale à X,
- tous les plots au nombre égal à X*N sont agencés sensiblement selon le même agencement relatif entre eux quel que soit le support,
- chaque plot connecté au collecteur de courant respectivement positif et négatif d'un support est agencé à une position différente d'un plot connecté au collecteur de courant respectivement positif et négatif d'un autre support,
- tous les supports au nombre égal à N sont empilés avec les plots alignés les uns sur les autres par nombre égal à N selon la direction d'empilement, les plots alignés par nombre égal à N étant en outre connectés entre eux.

Selon une caractéristique avantageuse, les nombres X1 et X2 de plots connecté(s) au(x) collecteur(s) de courant respectivement positif et négatif de l'élément supporté sont chacun égal à la moitié de X, soit X/2.

Plus particulièrement, les éléments de stockage et/ou de génération d'énergie électrique selon l'invention sont des micro-batteries réalisées chacune sur un support isolant électrique ou sur un support conducteur électrique recouvert au moins localement par un film isolant électrique adapté pour éviter tout court-circuit entre plots et entre micro-batteries et plots.

Tous les supports sont avantageusement réalisés à partir d'un même substrat.

De préférence, tous les supports des éléments empilés sont collés entre eux.

On prévoit avantageusement dans la configuration où chaque élément de stockage et/ou de génération électrique, tel qu'une micro-batterie, dépasse de son support, de surmonter chaque plot traversant d'un plot supplémentaire de hauteur au moins égale à la hauteur de l'élément de stockage et/ou génération électrique faisant saillie du support.

Dans la configuration où chaque élément de stockage et/ou de génération électrique, tel qu'une micro-batterie, est encastré dans son support, les plots supplémentaires ne sont plus nécessaires. De même dans une configuration où on prévoit de faire une cavité sur le dessous d'un support adjacent supérieur pour y loger lors de l'empilement l'élément, tel qu'une micro-batterie, supporté par un support inférieur, alors les plots supplémentaires ne sont plus nécessaires.

De préférence, les supports des éléments empilés sont collés entre eux par une colle adhésive isolante.

Selon une variante, toutes les couches minces des éléments empilés ayant la même fonctionnalité sont déposées avec le même matériau et la même épaisseur.

Selon une alternative, toutes les couches minces des éléments empilés ayant la même fonctionnalité sont déposées avec un matériau et/ou une épaisseur différent(s).

De préférence, tous les plots du dessus ou du dessous de l'empilement sont connectés individuellement à une patte d'une embase d'un boitier B, du type d'un boitier de circuit intégré.

Selon une variante, la connexion individuelle entre chaque plot du dessus ou du dessous de l'empilement et la patte peut être une connexion par fil.

Selon une variante alternative, la connexion individuelle entre chaque plot du dessus ou du dessous de l'empilement et la patte peut être une connexion par bille.

L'invention consiste donc essentiellement à réaliser une micro-source d'énergie électrique à architecture à empilement selon la première catégorie mentionnée en préambule mais avec des sorties électriques configurables par la mise en série et/ou en parallèle de tout ou partie des micro-batteries entre elles.

Autrement dit, l'invention consiste essentiellement dans le fait que les micro-batteries ne sont pas connectées électriquement entre elles au sein de l'empilement et ce jusqu'à la fin du procédé de fabrication. Chaque micro-batterie présente ainsi au moins deux collecteurs de courant terminaux positif et négatif indépendants, les terminaux de toutes les micro-batteries étant agencés en final sur un seul et même plan, au dessus ou au dessous de l'empilement. Une fois la fabrication achevée, c'est-à-dire l'empilement réalisé et la connexion électrique entre plots au sein de l'empilement faite, les terminaux sont en outre connectés à une unité de contrôle électronique adaptée pour configurer les différentes combinaisons de sorties possibles.

L'invention a également pour objet un système comprenant un dispositif de stockage et/ou de génération d'énergie électrique tel que décrit précédemment et une unité de contrôle électronique connectée à tous les plots du dessus ou du dessous de l'empilement des éléments de stockage et/ou de génération électrique, ladite unité de contrôle électronique étant adaptée pour commuter tout ou partie les collecteurs de courant des éléments entre eux en série et/ou en parallèle électrique.

### BRÈVE DESCRIPTION DES DESSINS

D'autres avantages et caractéristiques de l'invention ressortiront mieux à la lecture de la description détaillée d'un mode de réalisation de l'invention, faite à titre illustratif et non limitatif en référence aux figures 1 à 2 D parmi lesquelles:
- les figures 1 et 1A montrent respectivement en vue de dessus et en vue de coupe selon l'axe A-A' une micro-batterie unitaire M1 selon l'invention,
- les figures 2A à 2D montrent les différentes étapes de réalisation d'un dispositif de stockage et de génération d'énergie électrique à partir d'un nombre de trois micro-batteries unitaires M1, M2, M3 réalisées comme selon les figures 1 et 1A.

### EXPOSÉ DÉTAILLÉ DE MODES DE RÉALISATION PARTICULIERS

La micro-batterie M1 comprend dans l'ordre successif d'empilement des couches minces depuis son support S1 en matériau isolant électrique :
- une couche mince 10 constituant un premier collecteur de courant terminal, déposée directement sur le support S1,
- une couche mince 11 constituant l'électrode d'insertion positive, déposée sur le collecteur de courant 10,
- une couche mince 12 constituant l'électrolyte solide, déposée sur et en enveloppant l'électrode positive 11,
- une couche mince 13 constituant l'électrode d'insertion négative, déposée sur l'électrolyte 12,
- une couche mince 14 constituant le deuxième collecteur de courant terminal 14, déposée sur et en enveloppant l'électrode négative 12.

A titre d'exemple :
- la couche mince 11 est une couche de 1 à 3 µm d'épaisseur en LiTiOS,
- la couche mince 12 est une couche de 1 à 2 µm d'épaisseur en LiPON,
- la couche mince 13 est une couche de 50nm à 1 µm d'épaisseur en Si,
- les couches minces 10 et 14 sont chacune une couche de l'ordre de 250nm en Ti.

On peut prévoir une encapsulation sur une micro-batterie unitaire ou sur un empilement de micro-batteries formant le dispositif de stockage et de génération électrique M selon l'invention.

Le support S1 comprend en outre des trous traversant 1, 2, 3, 4 remplis chacun d'un matériau conducteur électronique en formant chacun un plot. Ces plots sont connus usuellement sous l'appellation vias dans le domaine de la microélectronique. Ces vias permettent donc la conduction électronique.

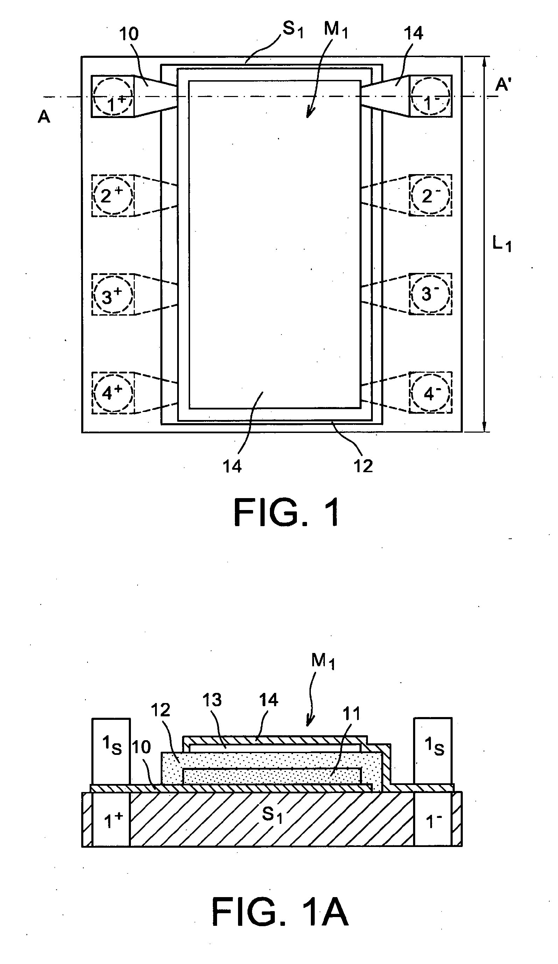

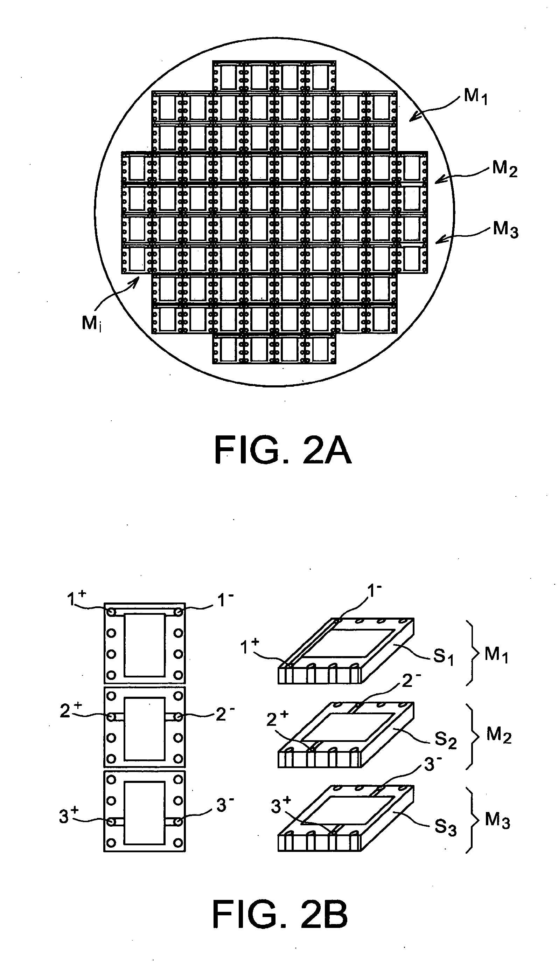

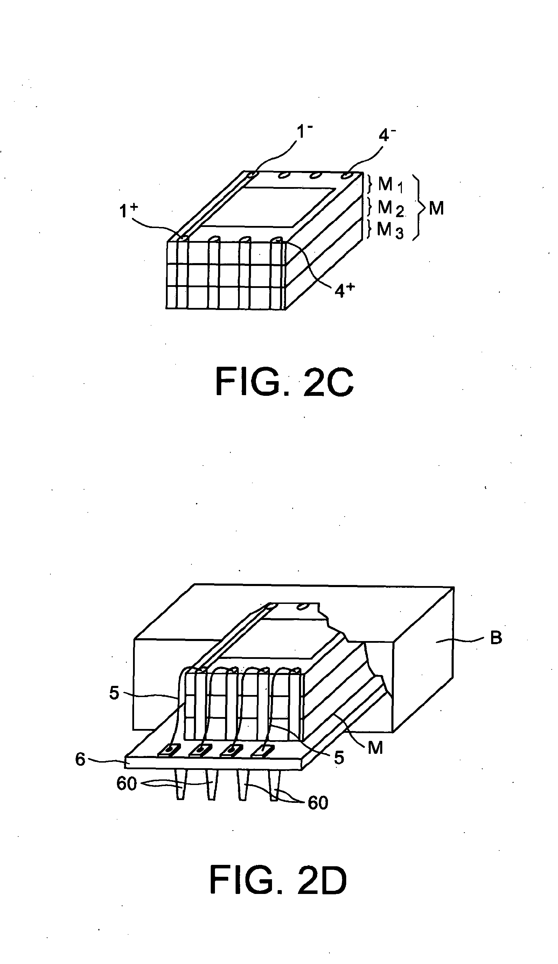

Comme représenté en figures 1 et 2, le support comprend un nombre de vias égal à huit répartis en deux groupes égaux 1⁺, 2⁺, 3⁺, 4⁺ ; 1⁻, 2⁻, 3⁻, 4⁻ de part et d'autre de la périphérie de l'empilement de couches minces 10, 11, 12, 13, 14 constituant la micro-batterie M1. Plus exactement encore, quatre 1⁺, 2⁺, 3⁺, 4⁺ sont prévus sur un bord de l'empilement de couches minces et les quatre autres 1⁻, 2⁻, 3⁻, 4⁻ sont prévus sur le bord opposé dans le sens de la longueur L1 de dépôt desdites couches.

Dans le cadre de l'invention, le nombre de vias peut être variable et dépend du nombre N de micro-batteries à empiler par la suite pour constituer une micro-source d'énergie électrique conforme à l'invention. Typiquement, le nombre de vias est au moins égal au double du nombre N de micro-batteries à empiler, si on choisit d'attribuer deux collecteurs de courant terminaux 1⁺, 1⁻ ; 2⁺, 2⁻ ; 3⁺, 3⁻ pour chaque micro-batterie à empiler. Plus généralement, selon l'invention, on réalise, pour chaque micro-batterie, un nombre de vias égal au minimum au nombre total N des micro-batteries à empiler multiplié par le nombre X de collecteur de courant terminaux souhaités par micro-batterie unitaire, soit un nombre au moins égal à X*N. Autrement dit, si chaque micro-batterie unitaire, présente un nombre égal à X1 plots positifs et un nombre égal à X2 plots négatifs, alors il est nécessaire dans le cadre de l'invention d'avoir un nombre égal à (X1+X2)*N plots par support.

Il peut être également intéressant de prévoir plusieurs plots pour un même collecteur de courant. Ainsi, par exemple, il est possible de relier un élément de stockage et/ou de génération électrique, tel qu'une micro-batterie à un autre dispositif électrique non relié à la charge de l'élément pour permettre de surveiller de manière automatique l'élément, réaliser des mesures de suivi de celui-ci...

En vue de coupe selon la figure 1A, on voit également qu'une couche mince supplémentaire 1S en matériau conducteur électronique a été déposée sélectivement au-dessus de chacun des vias 1⁺, 2⁺, 3⁺, 4⁺ ; 1⁻, 2⁻, 3⁻, 4⁻. Comme mieux expliqué par la suite, ces plots sélectifs supplémentaires 1S en matériau conducteur électronique ont une fonction pendant l'étape de collage de l'empilement des micro-batteries M1, M2, M3 les unes sur les autres.

Comme on peut le voir en figure 1, les vias 1⁺, 2⁺, 3⁺, 4⁺ ; 1⁻, 2⁻, 3⁻, 4⁻ réalisés sont, pour une micro-batterie donnée M1 de même dimension et réalisés dans le même matériau constitutif. Ils sont en outre alignés par groupe de quatre à une distance sensiblement égale du bord d'électrolyte. On peut envisager d'autres dimensions, des matériaux constitutifs différents et un autre agencement sur un support donné. Par contre, comme mieux visible par la suite, dans le cadre de l'invention, tous les vias au nombre égal à X*N sont agencés sensiblement selon le même agencement relatif entre eux quel que soit le support S1, S2, S3.

Pour la micro-batterie M1 représentée en figures 1 et 1A, les collecteurs de courant terminaux respectivement positif 10 et négatif 14 sont connectés chacun à un seul via 1⁺, 1⁻ réalisé à l'extrémité de l'alignement. Cela permet de déporter la connexion électrique dans le sens vertical au plan du support S1 de la micro-batterie M1. On peut prévoir une inversion de connexion c'est-à-dire avec le collecteur de courant positif 10 connecté au via 1⁺ agencé sur la droite de la figure 1 et respectivement, celui négatif 14 connecté au via 1⁻ agencé sur la gauche de cette figure 1.

Comme mieux visible sur la vue de dessus de la figure 2B, on réalise un même agencement relatif pour tous les vias 1⁺, 2⁺, 3⁺, 4⁺ ; 1⁻, 2⁻, 3⁻, 4⁻ d'un même support S1, S2, S3. Ainsi, lors de l'empilement des micro-batteries avec leur support associé les unes sur les autres, tous les vias se superposent dans la direction d'empilement par un nombre N de micro-batteries. Par contre, on définit pour chaque micro-batterie à empiler une position de contact électrique via-collecteur de courant terminale différente l'une de l'autre. Ainsi la connexion électrique est établie entre les collecteurs de courant respectivement positif 10 et négatif 14 avec :
- les vias 1⁺, 1⁻ pour la micro-batterie M1,
- les vias 2⁺, 2⁻ pour la micro-batterie M2,
- les vias 3⁺, 3⁻ pour la micro-batterie M3.

Autrement dit, les vias 4⁺, 4⁻ ne sont connectés à aucun collecteur de courant positif 10 et négatif 14 pour toutes les micro-batteries à empiler.

De cette manière, l'empilement des micro-batteries selon l'invention permet de déporter tous les collecteurs de courant terminaux positif et négatif verticalement depuis le plan de support de chaque micro-batterie vers le plan du dessus et/ou du dessous de l'empilement et permettre ainsi de connecter la micro-source d'énergie constituée à une unité de contrôle électronique. Une telle unité de contrôlé électronique permet alors de commuter sur les différentes combinaisons possibles, c'est-à-dire commuter différentes connexions électriques possibles entre les collecteurs terminaux des micro-batteries, et par là, configurer à souhait le niveau de tension de sortie ou la capacité de stockage.

Les figures 2A à 2D montrent les différentes étapes de réalisation pour obtenir complètement l'architecture à empilement de trois micro-batteries M1, M2, M3 selon l'invention.

On précise ici qu'à la différence de la configuration selon les figures 1 et 1A où la micro-batterie M1 fait saillie de son support S1 et où la présence des plots supplémentaires 1S est souhaitable, les micro-batteries M1, M2, M3 selon les figures 2A à 2D sont encastrées dans leur support respectif.

La première étape consiste à réaliser tous les vias 1⁺, 2⁺, 3⁺, 4⁺ ; 1⁻, 2⁻, 3⁻, 4⁻ dans un même substrat S en matériau isolant électronique et à effectuer le dépôt de toutes les couches minces constituant toutes les micro-batteries M1, M2, M3, Mi sur ledit substrat (figure 2A). Ici, par souci de clarté, on considère que chaque couche mince déposée 10, 11, 12, 13, 14 de même fonctionnalité (collecteur de courant positif, électrode positive, électrolyte solide, électrode négative, collecteur de courant négatif) est réalisée avec la même épaisseur et dans le même matériau constitutif pour toutes les micro-batteries. Le substrat peut être du Si, du verre... On peut envisager un substrat conducteur électronique : on prévoit alors de le recouvrir au moins localement par un film isolant électrique adapté pour éviter tout court-circuit entre micro-batterie et plots et entre plots.

Comme expliqué ci-dessus, et du fait de la position différente de contact via-collecteur de courant d'une micro-batterie avec son support à une autre, seule la topologie (aussi appelée « Layout » en anglais) des collecteurs de courant est différente d'une micro-batterie à une autre. On peut modifier cette topologie de préférence pendant une étape de photolithographie.

La deuxième étape consiste à découper individuellement les micro-batteries M1, M2, M3...Mi réalisées dans le même substrat S et à les classer par leur position à suivre dans l'empilement en fonction de la topologie des contacts vias-collecteurs de courant terminaux. Ainsi, comme montré en figure 2B, on place dans cet ordre successif d'empilement :
- la micro-batterie M1 découpée et réalisée avec les vias d'extrémité 1⁺, 1⁻ connectés à ses deux collecteurs de courant respectivement positif 10 et négatif 11 au dessus,
- la micro-batterie M2 adjacente en dessous de la micro-batterie M1, la micro-batterie M2 étant découpée et réalisée avec ses vias 2⁺, 2⁻immédiatement à côté de ses vias 1⁺, 1⁻ et connectés à ses deux collecteurs de courant respectivement positif 10 et négatif 11,
- la micro-batterie M3 adjacente en dessous de la micro-batterie M2, la micro-batterie M3 étant découpée et réalisée avec ses vias 3⁺, 3⁻immédiatement à côté de ses vias 2⁺, 2⁻ et connectés à ses deux collecteurs de courant respectivement positif 10 et négatif 11.

On précise ici qu'au préalable de la découpe du substrat commun S, on peut effectuer une étape d'amincissement de ce dernier.

La troisième étape consiste à réaliser le collage des micro-batteries M1, M2, M3 entre elles pour finaliser l'architecture à empilement selon l'invention. Une fois l'étape de collage réalisée (figure 2C), la connexion électrique entre vias de même position dans leur support S1, S2, S3 doit être assurée. Autrement dit, à la fin de l'étape de collage tous les vias référencés 1+, 1- ; 2+, 2- ; 3+, 3- ; 4+, 4- d'un support donné S1, S2, S3 sont connectés électriquement avec ceux référencés identiquement d'un autre support. Autrement dit, encore tous les vias d'une position donnée identique pour tous les supports sont connectés électriquement entre eux dans le sens de l'empilement mais seulement un d'entre eux est connecté à un collecteur de courant positif et un d'entre eux est connecté à un collecteur de courant négatif. Cette étape de collage peut être réalisée selon plusieurs technologies. De préférence, on effectue une étape de collage par diffusion en phase solide, c'est-à-dire un collage métal-métal avec formation d'intermétallique suite à l'application d'une pression mécanique à une température adéquate. Cette étape de collage peut être faite entre plots supplémentaires 1S en matériau conducteur électronique déposés sur un support donné S2 par exemple et les vias 1+, 1- du support S1 empilé au dessus. On peut aussi réaliser une étape de connexion/collage entre supports S1, S2, S3 par bille ou au moyen d'un film dit en anglais « *Anisotropic Conductive Film »* (ACF) déposé soit sur tout le support soit localement sur les vias.

A la fin de l'empilement physique entre micro-batteries M1, M2, M3 et la connexion électrique entre leurs vias de même agencement dans le sens de l'empilement, on a obtenu une micro-source d'énergie électrique M selon l'invention.

La quatrième étape consiste à finaliser la connexion de la micro-source M. Il s'agit ainsi de connecter individuellement tous les vias référencés 1+, 1- ; 2+, 2- ; 3+, 3- ; 4+, 4- de la micro-batterie M1 du dessus de l'empilement, à une patte 60 d'une embase 6 d'un boitier B, du type d'un boitier de circuit intégré. Comme montré sur la figure 2D, on peut réaliser cette connexion entre via et patte 60 selon une technique de soudure par fil 5 (en anglais « *wire bonding* »)*.* On peut aussi envisager d'autres techniques pour réaliser cette connexion comme, par exemple une technique de connexion par billes (en anglais « *flip chip bonding* »).

La micro-source d'énergie électrique M ainsi réalisée avec sa connectique extérieure 60, une connexion ultérieure avec une unité de contrôle électronique non représentée permet de commuter tout ou partie les collecteurs de courant des micro-batteries entre eux en série et/ou en parallèle électrique. En d'autres termes, on peut commuter sur les différentes combinaisons possibles entre micro-batteries M1 à M3 et configurer, par exemple, le niveau de tension de sortie ou la capacité de stockage.

Par exemple, pour mettre les trois micro-batteries M1, M2, M3 en parallèle électrique, on connecte à une même première borne extérieure les sorties 1-, 2-, 3- et à une même deuxième borne extérieure les sorties 1+, 2+, 3+.

Par exemple encore, pour mettre la micro-batterie M1 en série électrique avec la micro-batterie M3, on connecte la sortie 1- à une première borne extérieure, les sorties 1+ et 3- entre elles et enfin la sortie 3+ à la deuxième borne extérieure.

L'invention ainsi décrite présente les avantages suivants :
- configurer les sorties électriques en fonction de l'application considérée,
- élargir les possibilités de sorties en empilant des micro-batteries présentant des électrodes à matériaux d'insertion différents. Par exemple, on peut utiliser deux premières micro-batteries montées en série constituées chacune avec un couple d'électrodes positive/négative en Si/Li pour alimenter à une tension de sortie de 0,4 V et utiliser trois autres micro-batteries montées en série, empilées avec les deux premières, et constituées chacune avec un couple d'électrodes positive/négative en LiCoO₂/Li pour alimenter à une tension de sortie de 11.4 V,
- avoir simultanément deux ou plusieurs sorties de caractéristiques électriques différentes, avec des sorties qui n'utilisent pas une micro-batterie de l'empilement commune à elles.

D'autres variantes et améliorations peuvent être envisagées dans le cadre de l'invention. Ainsi, par exemple, si les plots référencés 4⁺, 4⁻ ne sont connectés à aucun collecteur de courant d'une micro-batterie, on peut tout aussi bien l'envisager, c'est-à-dire prévoir que tous les vias réalisés dans chaque support servent de contact à un collecteur de courant d'une micro-batterie donnée.

Comme déjà indiqué ci-dessus, on peut envisager un empilement de plusieurs micro-batteries formées avec des empilements de couches minces différents, en particulier lorsqu'on recherche deux niveaux de tension de sortie distincts. On peut ainsi empiler une ou plusieurs micro-batteries de type Li/LiPON/TiS sur une ou plusieurs micro-batteries de type Li/LiPON/LiCoO₂.

## Revendications

1. Dispositif de stockage et/ou de génération d'énergie électrique (M) comportant une pluralité d'un nombre égal à N d'éléments (M1, M2, M3) de stockage et/ou de génération d'énergie électrique réalisés chacun sur un support (S1, S2, S3) et empilés les uns sur les autres, **caractérisé en ce que** :
- chaque support comporte, à la périphérie des couches minces (10, 11, 12, 13, 14) composant l'élément supporté, une pluralité d'un nombre au moins égal à X*N de plots (1, 2, 3, 4) en matériau conducteur électronique traversant ledit support, avec un nombre égal à X1 de plots connecté (s) au(x) collecteur(s) de courant positif (10) de l'élément supporté et un nombre égal à X2 de plots connecté(s) au(x) collecteur(s) de courant négatif (14) de l'élément supporté, la somme X1 + X2 étant égale à X,
- tous les plots (1, 2, 3, 4) au nombre égal à X*N sont agencés sensiblement selon le même agencement relatif entre eux quel que soit le support (S1, S2, S3),
- chaque plot connecté au collecteur de courant respectivement positif et négatif d'un support est agencé à une position différente d'un plot connecté au collecteur de courant respectivement positif et négatif d'un autre support,
- tous les supports au nombre égal à N sont empilés avec les plots alignés les uns sur les autres par nombre égal à N selon la direction d'empilement, les plots alignés par nombre égal à N étant en outre connectés entre eux.

2. Dispositif de stockage et/ou de génération d'énergie électrique (M) selon la revendication 1, **caractérisé en ce que** les nombres X1 et X2 de plots connecté(s) au (x) collecteur(s) de courant respectivement positif (10) et négatif (14) de l'élément supporté sont chacun égal à la moitié de X, soit X/2.

3. Dispositif de stockage et/ou de génération d'énergie électrique (M) selon la revendication 1 ou 2, **caractérisé en ce que** les éléments de stockage et/ou de génération d'énergie électrique sont des micro-batteries réalisées chacune sur un support isolant électrique ou sur un support conducteur électrique recouvert au moins localement par un film isolant électrique adapté pour éviter tout court-circuit entre plots et entre micro-batteries et plots.

4. Dispositif de stockage et/ou de génération d'énergie électrique (M) selon l'une des revendications précédentes, **caractérisé en ce que** tous les supports (S1, S2, S3) sont réalisés à partir d'un même substrat (S).

5. Dispositif de stockage et/ou de génération d'énergie électrique (M) selon l'une des revendications précédentes, **caractérisé en ce que** tous les supports des éléments empilés sont collés entre eux.

6. Dispositif de stockage et/ou de génération d'énergie électrique (M) selon l'une des revendications précédentes, **caractérisé en ce que** chaque plot traversant (1+, 1- ; 2+, 2- ; 3+,3- ; 4+, 4-) est surmonté d'un plot supplémentaire (1S) de hauteur au moins égale à la hauteur de l'élément de stockage et/ou génération électrique faisant saillie du support.

7. Dispositif de stockage et/ou de génération d'énergie électrique (M) selon l'une des revendications précédentes, **caractérisé en ce que** les supports (S1, S2, S3) des éléments empilés sont collés entre eux par une colle adhésive isolante.

8. Dispositif de stockage et/ou de génération d'énergie électrique (M) selon l'une des revendications précédentes, **caractérisé en ce que** toutes les couches minces (10 ou 11 ou 12 ou 13 ou 14) des éléments empilés (M1, M2, M3) ayant la même fonctionnalité sont déposées avec le même matériau et la même épaisseur.

9. Dispositif de stockage et/ou de génération d'énergie électrique (M) selon l'une des revendications précédentes, **caractérisé en ce que** toutes les couches minces (10 ou 11 ou 12 ou 13 ou 14) des éléments empilés (M1, M2, M3) ayant la même fonctionnalité sont déposées avec un matériau et/ou une épaisseur différent(s).

10. Dispositif de stockage et/ou de génération d'énergie électrique (M) selon l'une des revendications précédentes, **caractérisé en ce que** tous les plots du dessus ou du dessous de l'empilement sont connectés individuellement à une patte (60) d'une embase (6) d'un boitier B, du type d'un boitier de circuit intégré.

11. Dispositif de stockage et/ou de génération d'énergie électrique (M) selon la revendication 10, **caractérisé en ce que** la connexion individuelle entre chaque plot du dessus ou du dessous de l'empilement et la patte est une connexion par fil (5).

12. Dispositif de stockage et/ou de génération d'énergie électrique (M) selon la revendication 10, **caractérisé en ce que** la connexion individuelle entre chaque plot du dessus ou du dessous de l'empilement et la patte est une connexion par bille.

13. Système comprenant un dispositif de stockage et/ou de génération d'énergie électrique (M) selon l'une des revendications précédentes et une unité de contrôle électronique connectée à tous les plots du dessus ou du dessous de l'empilement des éléments de stockage et/ou de génération électrique, ladite unité de contrôle électronique étant adaptée pour commuter tout ou partie les collecteurs de courant des éléments entre eux en série et/ou en parallèle électrique.

## Patentansprüche

1. Vorrichtung zum Speichern und/oder Erzeugen von elektrischer Energie (M), enthaltend eine Mehrzahl von Elementen (M1, M2, M3) zum Speichern und/oder Erzeugen von elektrischer Energie in einer Anzahl gleich N, die jeweils an einem Träger (S1, S2, S3) ausgebildet und aufeinander gestapelt sind, **dadurch gekennzeichnet, dass**
- jeder Träger am Umfang von dünnen Schichten (10, 11, 12, 13, 14), welche das zu tragende Element bilden, eine Mehrzahl von Stiften (1, 2, 3, 4) aus den Träger durchsetzendem, elektronenleitenden Material in einer Anzahl zumindest gleich X*N aufweist, und zwar mit einer Anzahl gleich X1 von Stiften, die mit dem bzw. den positiven Stromkollektor(en) (10) des zu tragenden Elements verbunden sind, und mit einer Anzahl gleich X2 von Stiften, die mit dem bzw. den negativen Stromkollektor(en) (14) des zu tragenden Elements verbunden sind, wobei die Summe X1 + X2 gleich X ist,
- sämtliche Stifte (1, 2, 3, 4) in einer Anzahl gleich X*N im Wesentlichen in der gleichen relativen Anordnung zueinander angeordnet sind, unabhängig von dem Träger (S1, S2, S3),
- jeder Stift, der mit dem positiven bzw. negativen Stromkollektor eines Trägers verbunden ist, in einer anderen Position eines Stifts angeordnet ist, der mit dem positiven bzw. negativen Stromkollektor eines anderen Trägers verbunden ist,
- sämtliche Träger in einer Anzahl gleich N mit den aufeinander ausgerichteten Stiften in einer Anzahl gleich N in der Stapelungsrichtung gestapelt sind, wobei die in einer Anzahl gleich N ausgerichteten Stifte ferner untereinander verbunden sind.

2. Vorrichtung zum Speichern und/oder Erzeugen von elektrischer Energie (M) nach Anspruch 1, **dadurch gekennzeichnet, dass** die Anzahlen X1 und X2 von Stiften, die mit den bzw. dem positiven (10) bzw. negativen (14) Stromkollektor(en) des zu tragenden Elements verbunden sind, jeweils gleich der Hälfte von X, d. h. X/2, ist.

3. Vorrichtung zum Speichern und/oder Erzeugen von elektrischer Energie (M) nach Anspruch 1 oder 2, **dadurch gekennzeichnet, dass** die Elemente zum Speichern und/oder Erzeugen von elektrischer Energie Mikrobatterien sind, die jeweils auf einem elektrisch isolierenden Träger oder auf einem elektrisch leitenden Träger ausgebildet sind, der zumindest bereichsweise mit einem elektrisch isolierenden Film bedeckt ist, der dazu ausgelegt ist, jeglichen Kurzschluss zwischen den Stiften und zwischen den Mikrobatterien und den Stiften zu vermeiden.

4. Vorrichtung zum Speichern und/oder Erzeugen von elektrischer Energie (M) nach einem der vorangehenden Ansprüche, **dadurch gekennzeichnet, dass** sämtliche Träger (S1, S2, S3) aus einem gleichen Substrat (S) hergestellt sind.

5. Vorrichtung zum Speichern und/oder Erzeugen von elektrischer Energie (M) nach einem der vorangehenden Ansprüche, **dadurch gekennzeichnet, dass** sämtliche Träger der gestapelten Elemente untereinander verklebt sind.

6. Vorrichtung zum Speichern und/oder Erzeugen von elektrischer Energie (M) nach einem der vorangehenden Ansprüche, **dadurch gekennzeichnet, dass** jeder durchgehende Stift (1+, 1-; 2+, 2-; 3+, 3-; 4+, 4-) von einem zusätzlichen Stift (1S) überhöht wird, der in der Höhe zumindest gleich der Höhe des Stromspeicher- und/oder Stromerzeugungselements ist, das von dem Träger vorspringt.

7. Vorrichtung zum Speichern und/oder Erzeugen von elektrischer Energie (M) nach einem der vorangehenden Ansprüche, **dadurch gekennzeichnet, dass** die Träger (S1, S2, S3) der gestapelten Elemente mittels eines isolierenden Klebstoffs untereinander verklebt sind.

8. Vorrichtung zum Speichern und/oder Erzeugen von elektrischer Energie (M) nach einem der vorangehenden Ansprüche, **dadurch gekennzeichnet, dass** sämtliche dünnen Schichten (10 bzw. 11 bzw. 12 bzw. 13 bzw. 14) der gestapelten Elemente (M1, M2, M3) mit der gleichen Funktionsweise aus dem gleichen Material und mit der gleichen Dicke aufgetragen sind.

9. Vorrichtung zum Speichern und/oder Erzeugen von elektrischer Energie (M) nach einem der vorangehenden Ansprüche, **dadurch gekennzeichnet, dass** sämtliche dünnen Schichten (10 bzw. 11 bzw. 12 bzw. 13 bzw. 14) der gestapelten Elemente (M1, M2, M3) mit der gleichen Funktionsweise aus einem anderen Material und/oder mit einer anderen Dicke aufgetragen sind.

10. Vorrichtung zum Speichern und/oder Erzeugen von elektrischer Energie (M) nach einem der vorangehenden Ansprüche, **dadurch gekennzeichnet, dass** sämtliche Stifte der Oberseite oder der Unterseite der Stapelung einzeln mit einer Lasche (60) eines Basisteils (6) eines Gehäuses B verbunden sind, das als Chipgehäuse ausgeführt ist.

11. Vorrichtung zum Speichern und/oder Erzeugen von elektrischer Energie (M) nach Anspruch 10, **dadurch gekennzeichnet, dass** die einzelne Verbindung zwischen jedem Stift von der Oberseite oder der Unterseite der Stapelung und der Lasche eine Drahtverbindung (5) ist.

12. Vorrichtung zum Speichern und/oder Erzeugen von elektrischer Energie (M) nach Anspruch 10, **dadurch gekennzeichnet, dass** die einzelne Verbindung zwischen jedem Stift von der Oberseite oder der Unterseite der Stapelung und der Lasche eine Kugelverbindung ist.

13. System mit einer Vorrichtung zum Speichern und/oder Erzeugen von elektrischer Energie (M) nach einem der vorangehenden Ansprüche und einer elektronischen Steuerungseinheit, die mit sämtlichen Stiften der Oberseite oder der Unterseite der Stapelung von Stromspeicher- und/oder Stromerzeugungselementen verbunden ist, wobei die elektronische Steuerungseinheit dazu ausgelegt ist, sämtliche Stromkollektoren der Elemente oder einen Teil davon elektrisch in Reihe und/oder parallel miteinander zu schalten.

## Claims

1. An electrical energy storage and/or generation device (M) having multiple electrical energy storage and/or generation elements (M1, M2, M3), where there are N such elements, each produced on a support (S1, S2, S3) and stacked one on top of another, **characterised in that**:
- each support has, at the periphery of the thin layers (10, 11, 12, 13, 14) composing the supported element, multiple pads (1, 2, 3, 4) made from an electron-conductive material, where there are X*N such pads, traversing the said support, where there are X1 pads connected to the positive bus(es) of the supported element, and where there are X2 pads connected to the negative bus(es) (14) of the supported element, and where the sum of X1 + X2 is equal to X,
- all the pads (1, 2, 3, 4), where there are X*N such pads, are positioned with roughly the same relative mutual positioning, whatever the support (S1, S2, S3),
- each pad connected to the bus, respectively positive and negative, of a support is positioned in a position which is different from a pad connected to the bus, respectively positive and negative, of another support,
- all the supports, where there are N such supports, are stacked with the pads aligned with one another in a number equal to N in the stacking direction, where the pads aligned in a number equal to N are also connected to one another.

2. An electrical energy and/or storage device (M) according to claim 1, **characterised in that** numbers X1 and X2 of pads connected to the respectively positive (10) and negative (14) bus(es) of the supported element are each equal to half X, i.e. X/2.

3. An electrical energy storage and/or generation device (M) according to claim 1 or 2, **characterised in that** the electrical energy storage and/or generation elements are microbatteries, each of which is produced on an electrical insulator support or on an electrical conductor support covered at least locally by an electrical insulating film able to prevent any short-circuiting between pads and between microbatteries and pads.

4. An electrical energy storage and/or generation device (M) according to one of the previous claims, **characterised in that** all the supports (S1, S2, S3) are produced from the same substrate (S).

5. An electrical energy storage and/or generation device (M) according to one of the previous claims, **characterised in that** all the supports of the stacked elements are bonded to one another.

6. An electrical energy storage and/or generation device (M) according to one of the previous claims, **characterised in that** each through pad (1+, 1-; 2+, 2-; 3+, 3-; 4+, 4-) is surmounted by an additional pad (1S) the height of which is at least equal to the height of the electrical storage and/or generation element extending beyond the support.

7. An electrical energy storage and/or generation device (M) according to one of the previous claims, **characterised in that** the supports (S1, S2, S3) of the stacked elements are bonded to one another by an insulating adhesive.

8. An electrical energy storage and/or generation device (M) according to one of the previous claims, **characterised in that** all the thin layers (10 or 11 or 12 or 13 or 14) of the stacked elements (M1, M2, M3) having the same function are deposited with the same material, and the same thickness.

9. An electrical energy storage and/or generation device (M) according to one of the previous claims, **characterised in that** all the thin layers (10 or 11 or 12 or 13 or 14) of the stacked elements (M1, M2, M3) having the same function are deposited with a different material and/or a different thickness.

10. An electrical energy storage and generation device (M) according to one of the previous claims, **characterised in that** all the pads at the top or at the bottom of the stack are connected individually to a tab (60) of a seat (6) of a unit B, of the integrated circuit unit type.

11. An electrical energy storage and/or generation device (M) according to claim 10, **characterised in that** the individual connection between each pad at the top or at the bottom of the stack and the tab is a wired connection (5).

12. An electrical energy storage and/or generation device (M) according to claim 10, **characterised in that** the individual connection between each pad at the top or at the bottom of the stack and the tab is a flip chip bond.

13. A system including an electrical energy storage and/or generation device (M) according to one of the previous claims, and an electronic control unit connected to all the pads at the top or at the bottom of the stack of electrical storage and/or generation elements, where the electronic control unit is able to switch all or a proportion of the buses of the elements to one another in electrical series and/or parallel.
